# DEMANDE DE BREVET EUROPEEN

(11) **EP 4 793 071 A1**
(43) Date de publication de la demande: **19.08.2026**
(21) Numéro de dépôt: 26159097.0
(22) Date de dépôt: 17.02.2026
(51) Int. Cl.: B60G 7/02

(54) **TRAIN AVANT DE VÉHICULE AUTOMOBILE**

(30) Priorité: 17.02.2025 FR 2501638
(71) Demandeur: Renault s.a.s, 92100 Boulogne Billancourt (FR)
(72) Inventeur: BERSON, Julien, 72000 LE MANS (FR); BLANCHE, Pierre, 72000 LE MANS (FR); DELAURE, Nicolas, 72000 LE MANS (FR); GAUGAIN, Laurent, 72000 LE MANS (FR)

(57) **Abrégé**

L'invention concerne un train avant (1) pour un véhicule automobile comportant un longeron de berceau (8) et un bras inférieur de suspension (2) ; le bras inférieur de suspension (2) comportant une partie avant (6) qui est montée articulée sur le longeron de berceau (8) autour d'un axe d'articulation A au moyen d'une première articulation (9), la première articulation (9) comportant deux pattes de fixation (11, 12) ; les pattes de fixation (9, 10) étant chacune fixées sur une entretoise (16, 17) qui est fixée au longeron de berceau (8) et dépasse dudit longeron de berceau (8) de sorte à décaler l'axe d'articulation A par rapport au longeron de berceau (8).

## Description

### Domaine de l'invention

L'invention a trait au domaine des véhicules automobiles.

Elle concerne notamment un train avant de véhicule automobile.

### Arrière-plan technologique

Les trains avant des véhicules automobiles, tels que les trains pseudo McPherson, comportent des bras inférieurs de suspension qui permettent de relier les roues avant au châssis du véhicule. Chaque bras inférieur de suspension joue un rôle essentiel dans la liaison mécanique et la stabilité de la suspension.

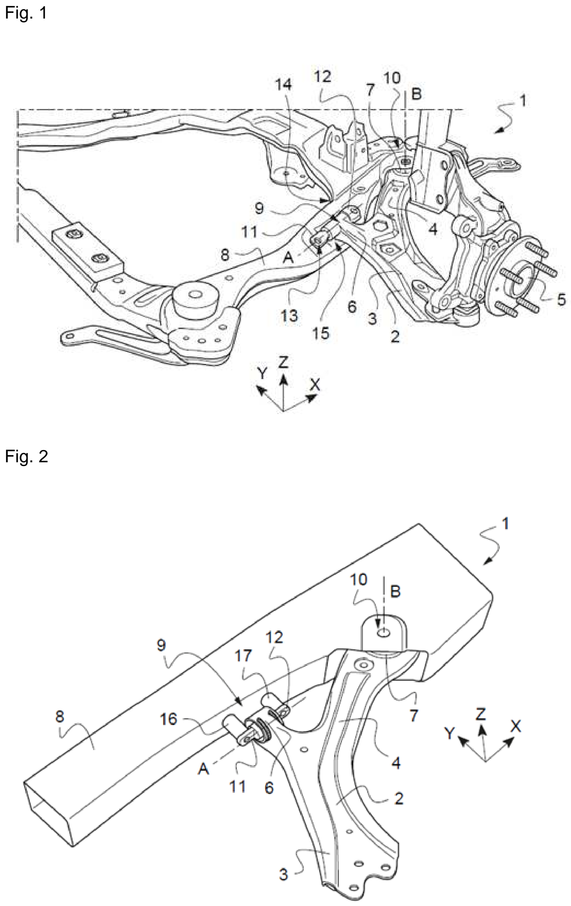

Un bras inférieur de suspension connu de l'état de la technique est illustré sur la figure 1. Ce bras présente généralement deux branches qui forment un « L ». Il est équipé d'une articulation à rotule qui est montée à l'extrémité d'une branche et est reliée au porte-fusée tandis que l'autre branche comporte une partie avant et une partie arrière. Ces deux parties, avant et arrière, sont reliées à un longeron de berceau du véhicule par des articulations permettant la mobilité nécessaire à la suspension.

La partie arrière du bras de suspension est montée de manière articulée sur le berceau autour d'un axe d'articulation vertical. En revanche, selon les différentes architectures de véhicules, la partie avant du bras peut être montée articulée soit autour d'un axe vertical, soit autour d'un axe horizontal.

Dans le cas où la partie avant du bras est montée articulée autour d'un axe horizontal, l'articulation est une articulation de type papillon. Elle comporte deux pattes de fixations qui dépassent de chaque côté et sont chacune munies d'un orifice recevant un organe de fixation. Chaque patte de fixation vient en appui contre une zone en saillie du longeron de berceau, formant ainsi un espace en creux entre ces deux zones en saillie, dans lequel le reste de l'articulation est logé.

La présence de ces zones en saillie engendre une modification de la section des longerons de berceau, ce qui a pour effet d'alourdir la structure finale du berceau et de réduire l'efficacité d'utilisation de la matière dans le processus de conception, notamment lors de la gamme d'emboutissage.

Ainsi, un tel agencement n'est pas satisfaisant en ce qu'il entraîne une augmentation du poids du véhicule, une complexité accrue de fabrication, et des contraintes supplémentaires dans l'optimisation de la conception structurelle du berceau.

### Résumé

Aussi, la présente invention vise à résoudre le problème consistant à réduire la masse et les contraintes liées à l'implantation d'une articulation à axe horizontal de la partie avant du bras inférieur de suspension sur un longeron de berceau.

Dans le but de résoudre ce problème, et selon un premier objet, il est proposé un train avant pour un véhicule automobile comportant un longeron de berceau et un bras inférieur de suspension ; le bras inférieur de suspension comportant une partie avant qui est montée articulée sur le longeron de berceau autour d'un axe d'articulation A au moyen d'une première articulation, la première articulation comportant deux pattes de fixation ; les pattes de fixation étant chacune fixées sur une entretoise qui est fixée au longeron de berceau et dépasse dudit longeron de berceau de sorte à décaler l'axe d'articulation A par rapport au longeron de berceau.

Ainsi, la présente invention permet de réduire la masse du véhicule en éliminant les zones en saillie du longeron de berceau qui alourdissent la structure du berceau. De plus, elle simplifie le processus de fabrication en minimisant les modifications de section des longerons de berceau, ce qui optimise l'utilisation de la matière et réduit les contraintes d'emboutissage.

Selon des modes de réalisation, un tel train avant peut comporter une ou plusieurs des caractéristiques suivantes.

Selon un mode de réalisation, l'axe d'articulation A est horizontal ou incliné de moins de 10°par rapport à l'horizontal.

Selon un mode de réalisation, les entretoises dépassent transversalement vers l'extérieur du longeron de berceau. Cela empêche ce dernier d'entraver le mouvement du bras inférieur de suspension lors de sa rotation autour de l'axe d'articulation A.

Selon un mode de réalisation, les entretoises sont montées dans des orifices ménagés dans le longeron de berceau.

Selon un mode de réalisation, les entretoises sont montées à force dans les orifices ménagés dans le longeron de berceau.

Selon un mode de réalisation alternatif ou complémentaire, les entretoises sont soudées dans les orifices du longeron de berceau.

Selon un mode de réalisation, chaque patte de fixation est munie d'un orifice qui est positionné en regard d'un trou ménagé dans l'une des entretoises, l'orifice et le trou recevant un organe de fixation pour fixer ladite patte de fixation à ladite entretoise.

Selon un mode de réalisation, l'organe de fixation est un ensemble vis-écrou.

Selon un mode de réalisation, les entretoises dépassent vers l'intérieur, par rapport au longeron de berceau. Cela offre un meilleur appui pour les organes de fixation comparé au longeron de berceau, surtout si sa surface intérieure n'est pas strictement perpendiculaire à la direction longitudinale des organes de fixation.

Selon un mode de réalisation, les trous des entretoises sont des trous taraudés et les organes de fixation comportent chacun une vis qui est vissée dans le trou taraudé de l'une des entretoises.

Selon un mode de réalisation, la première articulation est une liaison élastique conçue pour absorber les vibrations et les chocs.

Selon un mode de réalisation, la première articulation comporte :
- une bague externe qui est fixée à la partie avant du bras inférieur de suspension et qui est positionnée en partie entre les deux entretoises ;
- une armature intérieure, entourée par la bague externe, et reliée à celle-ci par un manchon élastomère positionné entre l'armature intérieure et la bague externe; l'armature intérieure se prolongeant axialement par les deux pattes de fixation qui dépassent de chaque côté de la bague externe.

Selon un mode de réalisation, le bras inférieur de suspension présente une forme de « L » formée de deux branches dont l'une présente une extrémité qui est orientée vers l'extérieur et est équipé d'une articulation à rotule qui est reliée au porte-fusée tandis que l'autre branche comporte la partie avant et une partie arrière.

Selon un mode de réalisation, la partie arrière est montée articulée sur le longeron de berceau autour d'un axe d'articulation B au moyen d'une deuxième articulation.

Selon un mode de réalisation, la deuxième articulation est une liaison élastique conçue pour absorber les vibrations et les chocs.

Selon un mode de réalisation, l'axe d'articulation B est vertical.

Selon un deuxième objet, il est proposé un véhicule automobile comportant un train avant du type précité.

### Brève description des figures

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une représentation partielle en perspective de la partie gauche d'un train avant selon l'état de la technique.
[Fig. 2] est une représentation partielle en perspective de la partie gauche d'un train avant selon un mode de réalisation.
[Fig. 3] est une vue en coupe du longeron de berceau et de l'articulation de la partie avant du bras inférieur de suspension de la figure 2.
[Fig. 4] est une vue en coupe selon le plan IV- IV illustré sur la figure 3.
[Fig. 5] est une vue en perspective du bras inférieur de suspension.

### Description des modes de réalisation

Les orientations exprimées dans la description sont données en référence à un repère orthonormé XYZ, représenté sur les figures, dans lequel X représente la direction longitudinale, orientée de l'avant vers l'arrière du véhicule, Y la direction transversale orientée vers la droite du véhicule, et Z la direction verticale orientée vers le haut du véhicule en position usuelle, reposant sur ses roues.

En relation avec la figure 1, on décrit ci-dessous un train avant 1 de véhicule selon l'état de la technique.

Le train avant 1 comprend deux bras inférieurs de suspension 2, dont un seul, le gauche, est ici représenté sur la figure 1. Chaque bras inférieur de suspension 2 comporte deux branches 3, 4 définissant une forme générale en L.

L'extrémité de l'une des branches 3 est orientée vers l'extérieur du véhicule et est équipée d'une articulation à rotule qui est reliée à un porte-fusée 5, lequel assure la liaison avec la roue, non représentée.

L'autre branche 4 du bras inférieur de suspension 2 longe un longeron de berceau 8. Elle est orientée vers l'arrière et comprend une partie avant 6 et une partie arrière 7, chacune étant reliée au châssis, et plus particulièrement au longeron de berceau 8, par une articulation 9, 10 respective. Ces articulations 9, 10 sont des liaisons élastiques, conçues pour absorber les vibrations et les chocs, améliorant ainsi le confort de conduite et la durabilité des composants.

La partie arrière 7 du bras inférieur de suspension 2 est montée articulée sur le châssis autour d'un axe vertical B. En revanche, la partie avant 6 est montée articulée sur le châssis autour d'un axe A qui est horizontal ou sensiblement horizontal, c'est-à-dire incliné de moins de 10°pa r rapport à l'horizontal, et autorise ainsi le bras à pivoter dans le plan vertical. L'axe A est parallèle à l'axe longitudinal X du véhicule, ou sensiblement parallèle à celui-ci, c'est-à-dire qu'il est incliné de moins de 10°par rapport à celui-ci.

La partie avant 6 est ici articulée autour de l'axe A à l'aide d'une articulation 9, dite de type papillon. Ce type d'articulation comporte deux pattes de fixation 11, 12 qui dépassent de chaque côté et qui sont chacune munies d'un orifice recevant un organe de fixation, non représenté, permettant ainsi leur fixation au longeron de berceau 8.

Sur la figure 1, chaque patte de fixation 11, 12 s'appuie contre une zone en saillie 13, 14 du longeron de berceau 8, formant ainsi un espace en creux 15 entre ces deux zones en saillie. Cet espace en creux 15 est ainsi conçu pour loger le reste de l'articulation 9 tout en permettant son débattement. Un tel agencement n'est pas satisfaisant en ce qu'il entraîne une augmentation du poids du véhicule et une complexité accrue de fabrication du longeron de berceau 8.

En se référant aux figures 2 à 5, nous décrirons ci-dessous un train avant 1 selon un mode de réalisation de l'invention. Ce train avant 1 se distingue de l'état de la technique, tel que représenté sur la figure 1, par la structure du longeron de berceau 8 et les moyens de fixation de l'articulation 9 de la partie avant 6 du bras inférieur de suspension 2 à ce longeron de berceau 8.

Comme illustré sur les figures 2 à 4, chaque patte de fixation 11, 12 de l'articulation 9 n'est pas directement montée sur le longeron de berceau 8, mais sur une entretoise 16, 17 qui dépasse du longeron de berceau 8. Cela permet de décaler l'axe d'articulation A par rapport au longeron de berceau 8. De manière avantageuse, les entretoises 16, 17 dépassent transversalement vers l'extérieur du longeron de berceau 8, ce qui empêche le longeron de berceau 8 de gêner le mouvement du bras inférieur de suspension 2 lorsqu'il pivote autour de l'axe d'articulation A.

Les entretoises 16, 17 sont insérées dans des orifices ménagés dans le longeron de berceau 8 et le traversent complètement. Ces entretoises 16, 17 présentent un trou permettent le passage d'organes de fixation (non représentés). Pour ce faire, les pattes de fixation 11, 12 sont positionnées de manière que leur orifice soit aligné avec le trou de l'une des entretoises 16 ou 17, permettant ainsi aux organes de fixation de fixer les pattes de fixation 11 et 12 aux entretoises 16 et 17.

Les organes de fixation peuvent être des ensembles vis-écrou, la vis traversant l'entretoise 16, 17. Selon une première configuration, la vis est introduite par l'extrémité intérieure de l'entretoise 16, 17, tandis que l'écrou est placé à l'extérieur, contre la patte de fixation 11, 12 correspondante. Alternativement, la vis est insérée de l'extérieur, sa tête étant en appui contre la patte de fixation 11, 12 et l'écrou, placé à l'intérieur, contre l'extrémité intérieure de l'entretoise 16, 17 correspondante. Selon une variante avantageuse, les écrous peuvent être soudé à l'extrémité intérieure de l'une des entretoises 16, 17 ou à l'une des pattes de fixation 11, 12.

Dans un autre mode de réalisation, les trous des entretoises 16, 17 sont taraudés pour permettre aux vis d'y être directement vissées.

Dans le mode de réalisation illustré, les entretoises 16, 17 sont insérées à force dans les orifices du longeron de berceau 8. En alternative, elles peuvent également être fixées par d'autres moyens, comme le soudage.

Dans le mode de réalisation avantageux représenté, les entretoises 16, 17 dépassent vers l'intérieur, par rapport au longeron de berceau 8, créant ainsi des surfaces d'appui pour les organes de fixation perpendiculaires à leur direction longitudinale. Cela offre un meilleur appui comparé au longeron de berceau 8, surtout si sa surface intérieure n'est pas strictement perpendiculaire à la direction longitudinale des organes de fixation.

Les entretoises 16, 17 sont avantageusement réalisées en acier.

Le longeron de berceau 8 est une structure en tôle, de type monocouture ou bi-coquilles. Dans une structure monocouture, une seule pièce de tôle est soudée et pliée tandis que, dans une structure bi-coquilles, deux demi-coques distinctes en tôle sont fabriquées puis sont ensuite assemblées et soudées ensemble pour former le longeron de berceau 8.

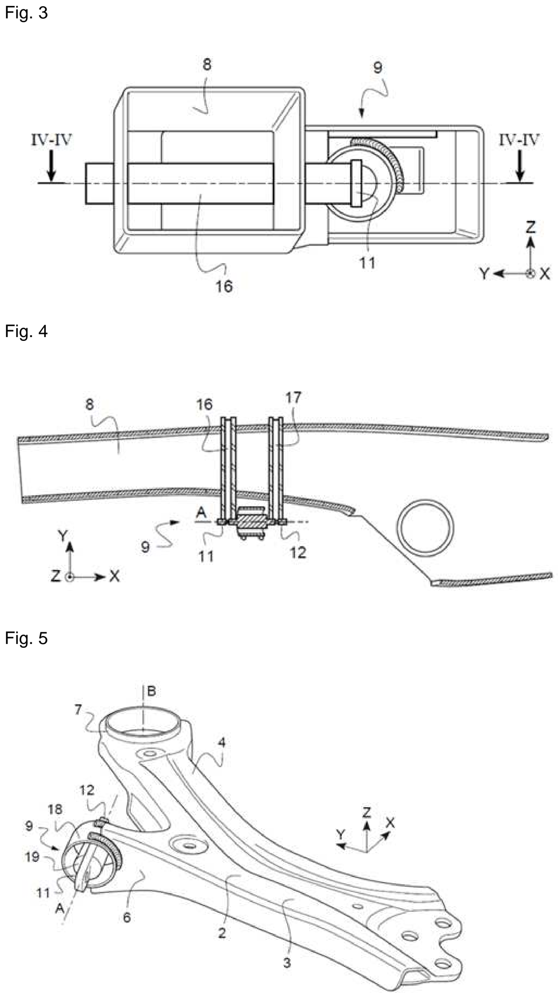

En relation avec la figure 5, la structure de l'articulation 9 est décrite selon un mode de réalisation. L'articulation 9 comprend une bague externe 18, fixée au bras inférieur de suspension 2, notamment à la partie avant 6, préférablement par soudure. Une armature intérieure 19, entourée par la bague externe 18, est reliée à celle-ci par un manchon élastomère (non représenté) positionné entre l'armature intérieure 19 et la bague externe 18. L'armature intérieure 19 se prolonge axialement par les deux pattes de fixation 11, 12, qui dépassent de chaque côté de la bague externe 18. Chaque patte de fixation 11, 12 est munie d'un orifice pour accueillir un organe de fixation, permettant ainsi leur fixation au longeron de berceau 8.

Bien que l'invention ait été décrite en liaison avec plusieurs modes de réalisation particuliers, **il** est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

L'usage du verbe « comporter », « comprendre » ou «inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Train avant (1) pour un véhicule automobile comportant un longeron de berceau (8) et un bras inférieur de suspension (2) ; le bras inférieur de suspension (2) comportant une partie avant (6) qui est montée articulée sur le longeron de berceau (8) autour d'un axe d'articulation A au moyen d'une première articulation (9), la première articulation (9) comportant deux pattes de fixation (11, 12) ; les pattes de fixation (9, 10) étant chacune fixées sur une entretoise (16, 17) qui est fixée au longeron de berceau (8) et dépasse dudit longeron de berceau (8) de sorte à décaler l'axe d'articulation A par rapport au longeron de berceau (8).

2. Train avant (1) selon la revendication 1, dans lequel l'axe d'articulation A est horizontal ou incliné de moins de 10°par rapport à l'horizontal.

3. Train avant (1) selon la revendication 1 ou 2, dans lequel les entretoises (16, 17) dépassent transversalement vers l'extérieur du longeron de berceau (8).

4. Train avant (1) selon l'une quelconque des revendications 1 à 3, dans lequel les entretoises (16, 17) sont montées dans des orifices ménagés dans le longeron de berceau (8).

5. Train avant (1) selon la revendication 4, dans lequel les entretoises (16, 17) sont montées à force dans les orifices ménagés dans le longeron de berceau (8).

6. Train avant (1) selon l'une quelconque des revendications 1 à 5, dans lequel chaque patte de fixation (11, 12) est munie d'un orifice qui est positionné en regard d'un trou ménagé dans l'une des entretoises (16, 17), l'orifice et le trou recevant un organe de fixation pour fixer ladite patte de fixation (11, 12) à ladite entretoise (16, 17).

7. Train avant (1) selon la revendication 6, dans lequel l'organe de fixation est un ensemble vis-écrou.

8. Train avant (1) selon la revendication 6, dans lequel les trous des entretoises (16, 17) sont des trous taraudés et les organes de fixation comportent chacun une vis qui est vissée dans le trou taraudé de l'une des entretoises (16, 17).

9. Train avant (1) selon l'une quelconque des revendications 1 à 8, dans lequel la première articulation (9) comporte :
- une bague externe (18) qui est fixée à la partie avant (6) du bras inférieur de suspension (2) et qui est positionnée en partie entre les deux entretoises (16, 17) ;
- une armature intérieure (19), entourée par la bague externe (18), et reliée à celle-ci par un manchon élastomère positionné entre l'armature intérieure (19) et la bague externe (18) ;
l'armature intérieure (19) se prolongeant axialement par les deux pattes de fixation (11, 12) qui dépassent de chaque côté de la bague externe (18).

10. Véhicule automobile comportant un train avant (1) selon l'une quelconque des revendications 1 à 9.
